# EUROPEAN PATENT APPLICATION

(11) **EP 1 089 029 A2**
(43) Date of publication of application: **04.04.2001**
(21) Application number: 00308530.5
(22) Date of filing: 28.09.2000
(51) Int. Cl.: F16L 47/00, F16L 21/08

(54) **Coupling sleeve for connecting a metal pipe and a resin hose**

(30) Priority: 28.09.1999 JP 27438899; 28.09.1999 JP 27438999; 06.03.2000 JP 2000060712; 14.07.2000 JP 2000213728; 31.08.2000 JP 2000262704
(71) Applicant: Tokai Rubber Industries, Ltd., Komaki-shi, Aichi-ken, 485-8550 (JP)
(72) Inventor: Shimizu, Hisahiro, Tiyota-shi, Aichi-ken, 470-1201 (JP); Kataoka, Minoru, Komaki-shi, Aichi-ken, 485-0011 (JP)
(74) Representative: Copsey, Timothy Graham

(57) **Abstract**

A connecting member 20 made of elastomer, the connecting member having a molded surface, is employed, and a metal tube 30 and a resin tube 40 are fixed to both ends thereof. The resin tube 40 has an annular protrusion 42 on the outer periphery face of a connecting end 41, and press-fitted into the connecting member 20 or cure bonded, thereby being fixed to the connecting member without employing a tightening member. In addition, a one-way valve integral with or independent from the connecting member 20 can be disposed between the metal tube 30 and the resin tube 40 fixed to the connecting member 20.

## Description

The present invention relates to a connecting structure for connecting one tubular member to a counterpart member through a connecting member as in the case where a metal tube and a resin tube are connected to each other as a vehicle fuel pipe through a connecting member.

Conventionally, most of the pipes of a fuel system or an air system have been composed of a rubber hose and a metal tube that is a counterpart member, and a metal based tightening member such as clamp has been used for assembling these pipes.

However, in such piping structure, it is difficult to cope with requirements for recent low cost and weight reduction, and it is necessary to engage and tighten clamps or the like on the outer periphery of the connecting portion when the rubber hose and the metal tube are assembled. Therefore, assembling workability has been poor, and sealing properties in the connecting portion has not been sufficient.

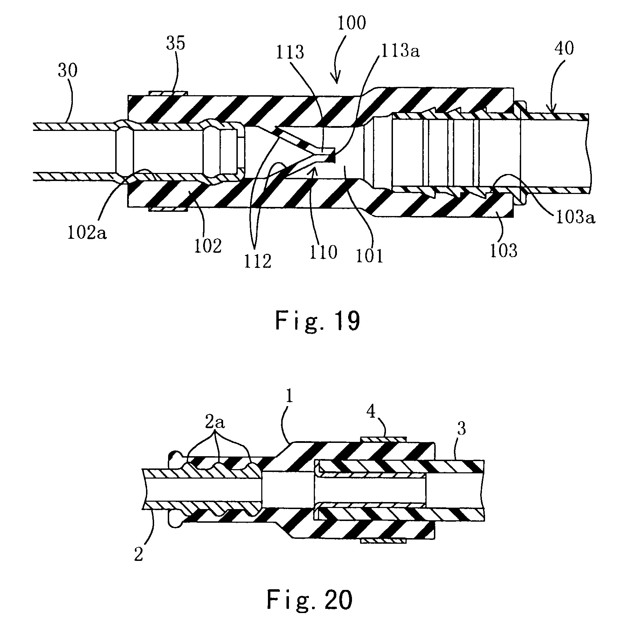

It is discussed that a resin tube is used instead of a rubber hose, and a connecting member is employed to assemble with the metal tube without a clamp. A connecting structure of such type and a connecting member employed therefor are described in Japanese Utility Model Application Laid-open No. 57-117490, for example. That is, as shown in FIG. 20, an insertion end of a tubular member 2 having a plurality of annular protrusions 2a formed at the outer periphery and a connecting end of a resin tube 3 are pressed respectively into both ends of a connecting member 1 cylindrically formed of a resilient material.

However, in such conventional connecting member 1, a connecting bore section is merely formed in a smooth straight shape in parallel to an axis. Thus, it is required to set an inner diameter of the connecting bore section to be sufficiently smaller than an outer diameter of an insertion end in order to prevent the insertion end of the tubular member 2 from easily slipping off. Therefore, a large insertion force is required to press-in, and there has been a problem that sufficient anti-pulling force cannot be obtained for such required large insertion force. Further, there has been a need to employ a tightening member 4 such as clamp in order to prevent the resin tube 3 from slip-off.

In addition, as another resin tube connecting structure, there is known a connecting structure described in Japanese Utility Model Application Laid-open No. 63-132189, for example. That is, there is known a resin tube connecting structure that is made to connect a resin tube to an exhaust tube of the air cleaner through a rubber hose (a cylinder member) in order to connect an air cleaner and a throttle body via a resin tube.

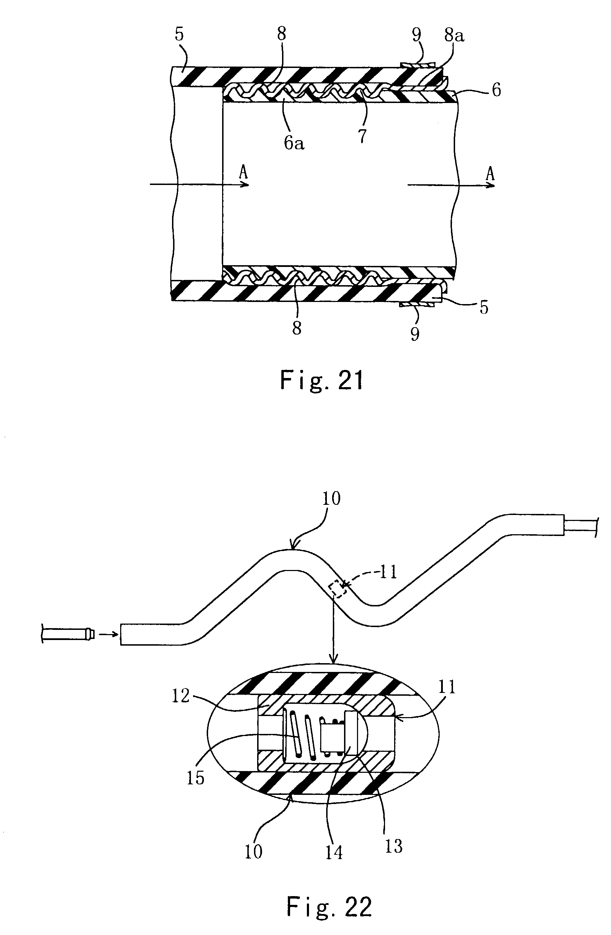

In such conventional resin tube connecting structure, in order to improve sealing properties between a resin tube and a connecting portion of a rubber based cylinder member, a spirally shaped wave section 7 is provided on the outer periphery face of an insertion end portion 6a of a resin tube 6 formed by blow molding, as shown in FIG. 21, and a wave shaped metal tube 8 is intimately fitted spirally to this spirally shaped wave section 7. This wave shaped metal tube 8 is inserted into an engagement bore at one end of a rubber based cylinder member 5, and a clip 9 is disposed at the outer periphery of the tip end of the cylinder member 5. In this way, the clip 9 can tighten comparatively strongly a straight section 8a formed at the rear of a metal tube 8 so as not to prevent liquid leakage. The arrows shown in the figure indicates the flow of air absorbed into an engine.

However, in such conventional resin tube connecting structure, the number of parts is increased because a wave shaped metal tube 8 is required. In addition, a site between the outer periphery face of the metal tube 8 spirally fitted to the insertion end of the resin tube 6 and the inner periphery face of the rubber based cylinder member 5 slips easily. Thus, there has been a danger that the resin tube 6 slips from the cylinder member 5.

Further, in a pipe for connecting a vehicle engine and a booster of a brake power multiplier, it is required that an engine side is set to a negative pressure, that is, that a fluid always flows toward the engine side, and does not flow in a reverse direction. Conventionally, a check valve comprising a valve body biased by a valve spring has been used to be disposed inside of a rubber hose or rubber joint such as vacuum brake hose.

As such check valve device, there is a structure described in Japanese Patent Utility Model Application Laid-open No. 63-42997. For example, as shown in FIG. 22, another check valve 11 is disposed to be inserted into a rubber hose 10 such as vacuum brake hose. This check valve 11 comprises: a substantially cylindrical housing 12; a valve seat 13 formed at one end of the housing 12; a valve body 14 biased toward the valve seat 13; and a valve spring 15 adopted to bias the valve body 14 toward the valve seat 13.

However, such conventional check valve device is composed of a number of parts such as housing 12, valve seat 13, valve body 14, valve spring 15 or the like, and its assembling and insertion into the rubber hose has been troublesome. In addition, as described above, although a resin tube or hose is likely to be employed instead of the rubber hose recently, the resin tube makes it difficult to insert and fix the check valve while the valve is resiliently deformed. Thus, while the resin tube is cut at its intermediate part, a nipple section is provided at both ends of the check valve, and an end of the tube cut at the respective nipple section is pressed-in, and connected. However, there is a problem that such press-in and connection are troublesome and expensive.

The present invention has been made to solve such conventional problems. It is a first object of the present invention to provide a connecting structure in which sufficiently large anti-pulling properties and sealing properties can be obtained to cope with replacement of a rubber hose with a resin tube while reducing the force caused when an end of a resin tube or metal tube is press-fitted into an engagement bore of a connecting member. It is a second object of the present invention to provide a connecting structure having a check valve device (a one-way valve) disposed intermediately.

In order to achieve the foregoing objects, a connecting structure for connecting opposite tubes each other that the present invention provides comprises: a cylindrical connecting member made of an elastomer, the connecting member having a first engagement bore at one end, having a second engagement bore at the other end, and having a molded surface; a metal tube in which an insertion end of its outer diameter substantially greater than an inner diameter of a first engagement bore of the connecting member is fixed to be inserted into the first engagement bore; and a resin tube having an annular protrusion formed to be protruded on the outer periphery face of a connecting end connected to the second engagement bore of the connecting member, the connecting end being fixedly connected into the second engagement bore of the connecting member without the other end being tightened by a tightening member annually arranged from its outer periphery.

In addition, another connecting structure for a resin tube according to the present invention comprises: a cylindrical connecting member made of elastomer, the connecting member having a molded surface having an engagement bore at least at one end; and a resin tube having an annular protrusion formed to be protruded on the outer periphery face of a connecting end connected to an engagement bore of the connecting member, the connecting end being fixedly connected into the engagement bore of the connecting member without tightening the one end by a tightening member annually arranged from its outer periphery.

According to one aspect of the present invention, there is provided a connecting structure, wherein an outer diameter of the connecting end of the resin tube is formed to be greater than an inner diameter of a second engagement bore of the connecting member, and the connecting end of the resin tube is press-fitted into a second engagement bore of the connecting member. According to another aspect of the present invention, the connecting member molded on the outer periphery of a connecting end of a resin tube is fixed to the resin tube by cure bonding.

In the above connecting structure, the first engagement bore of the connecting member has a taper face section having an inner diameter smaller than an outer diameter of the insertion end of the metal tube, the taper face section having an annular taper face on which the inner diameter is gradually reduced inwardly from the one end; an innermost engagement bore section provided so that a tip end part of the insertion end of the metal tube can be inserted more inwardly than the taper face section, the engagement section having an inner diameter smaller than the outer diameter of the tip end; and an annular groove section disposed between the taper face section and the innermost engagement bore section, the annular groove section having an inner diameter greater than the outer diameter of the insertion end of the metal tube. In this case, the metal tube comprises an annular protrusion in which the tip end part of the insertion end inserted into the first engagement groove section of the connecting member is disposed at the innermost engagement bore section, the annular protrusion having an outer diameter greater than an inner diameter of the annular groove section disposed to be engaged with the annular groove section of the connecting member on the outer periphery face of the tip end.

Further, a connecting structure that the present invention provides comprises a one-way valve arranged at an intermediate bore section between the first engagement bore and the second engagement bore of the connecting member, so that a flow passage is opened from one end toward the other end due to a pressure difference in fluid generated between the one end side and the other end side, while the fluid cannot flow from the other end to one end. In such connecting structure, the one-way valve comprises a deformable peripheral wall extending in concentric direction integrally from the inner periphery face of the intermediate bore section of the connecting member. In addition, a structure having an intimate contact section gradually reduced in diameter from the one end to the other end, the contact section coming into substantially intimate contact can be provided so that the peripheral wall enables fluid flow from one end to the other end and vice versa.

In addition, the one-way valve according to the present invention can be structured to comprise a deformable peripheral wall extending in concentric direction integrally from the inner periphery face of the intermediate bore of the connecting member, and the deformable peripheral wall has a plurality of folding portions and protruding portions alternately in a peripheral direction which are gradually inclined in concentric direction, the protruding portion having an intimate contact portion formed at the other end of the deformable peripheral wall so that the deformable peripheral wall enables fluid flow from one end to the other end and disables fluid flow from the other end to one end.

Furthermore, the one-way valve according to the present invention is made of elastomer and comprises: a cylindrical proximal end capable of being attached to the intermediate bore section of the connecting member; and a deformable peripheral wall extending in a concentric direction integrally from a cylindrical wall of the proximal end, and the deformable peripheral wall has a plurality of folding portions and protruding portions alternately in a peripheral direction which are gradually inclined in concentric direction, the protruding portion having an intimate contact portion formed at the other side of the deformable peripheral wall so that the deformable peripheral wall enables fluid flow from one end to the other end and disables fluid flow from the other end to one end.

According to the present invention, there can be provided a connecting structure in which sufficiently large anti-pulling properties and sealing properties can be obtained while the force for pressing the end of a resin tube or metal tube into the engagement bore of a connecting member is restricted to the minimum to cope with a resin based rubber hose. In addition, there is no need to use a tightening member such as clamp or clip for resin tube connection, making it possible to reduce the number of parts, cost, and weight. Moreover, the resin tube and connecting member is cure bonded easily and precisely, and moreover, rigidly by means of molding, whereby sealing properties and anti-pulling properties between the resin tube and the connecting member can be further improved.

Further, according to the present invention, there can be provided a connecting structure in which a one-way valve that flows fluid in predetermined arbitrary direction is provided inside of the connecting member. Therefore, the connecting member can be configured with a very small number of parts by incorporating a one-way valve, and its manufacture and assembling are easy. In particular, the one-way valve and the connecting member are integrally made of elastomer, thereby making it possible to manufacturing by one molding and making it advantageous to reduce cost.
FIG. 1 is a side view showing a main portion of a specific example of a connecting structure according to the present invention, whose upper half is shown in section;
FIG. 2 is a side view showing the connecting member according to the present invention shown in FIG. 1, whose upper half is shown in section;
FIG. 3 is a side view showing a metal tube and its tip end according to the present invention shown in FIG. 1, whose upper half is shown in section;
FIG. 4 is a side view showing a main portion of another specific example of the connecting structure according to the present invention whose upper half is shown in section;
FIG. 5 is a side view showing an end of a resin tube according to the present invention shown in FIG. 1, whose upper half is shown in section;
FIG. 6 is a side view of a resin tube according to the present invention shown in FIG. 1;
FIG. 7 is a schematic view for illustrating a method of manufacturing a resin tube;
FIG. 8 is a sectional side view showing a main portion of another specific example of the connecting structure according to the present invention;
FIG. 9 is a side view showing an end of the resin tube according to the present invention shown in FIG. 8, whose upper half is shown in section;
FIG. 10 is a sectional side view showing a die for molding the connecting structure shown in FIG. 8;
FIG. 11 is a sectional side view showing a state in which an elastomer material is charged in the die shown in FIG. 10;
FIG. 12 is a side view showing the connecting structure having a connecting member on both ends according to the present invention, whose upper half is shown in section;
FIG. 13 is a sectional side view showing another specific example of the connecting member according to the present invention;
FIG. 14 is a sectional side view showing the connecting structure employing the connecting member shown in FIG. 13;
FIG. 15 is a sectional side view showing a specific example of the connecting structure comprising a one-way valve according to the present invention;
FIG. 16 is a schematic front view of a state in which the one-way valve shown in FIG. 15 is closed viewed from the downward side in the fluid flow direction;
FIG. 17A and FIG. 17B each are a sectional front view showing the connecting structure shown in FIG. 15, a schematic sectional view taken along line A-A, and a schematic sectional view taken along line B-B;
FIG. 18 is a sectional side view showing another specific example of the connecting structure comprising the one-way valve according to the present invention;
FIG. 19 is a sectional side view showing still another specific example of the connecting structure comprising the one-way valve according to the present invention;
FIG. 20 is a sectional, schematic side view showing a conventional connecting structure employing its resin tube;
FIG. 21 is a sectional, schematic side view showing main portion of another conventional connecting structure employing its resin tube; and
FIG. 22 is a sectional side view showing a conventional connecting structure comprising its one-way valve and its enlarged main portion.

In a connecting structure according to the present invention, a resin tube is employed as a pipe of a vehicle fuel system or air system instead of a conventional rubber hose. In addition, a cylindrical connecting member consisting of molded elastomer is used as means for connecting the resin tube to a metal tube that is a counterpart member or the like. A connecting end of the resin tube is a straight tube shape that extends straight, and one or plural annular protrusions are formed to be protruded outwardly in radial direction on the outer periphery face.

In such connecting structure according to the present invention, a connecting end of the resin tube is press-fitted into a second engagement bore of a connecting member consisting of elastomer or the connecting member consisting of elastomer is cure bonded by molding on the outer periphery of the connecting end of the resin tube, thereby to be fixed to each other rigidly and intimately. In the case where they are fixed by press-in, it is required to form the outer diameter of the connecting end of the resin tube in advance to be greater than the inner diameter of the second engagement bore of the connecting member.

In the connecting structure having such arrangement according to the present invention, a connecting end having an annular protrusion of a resin tube can be fixed rigidly to a second engagement bore of a connecting member. Thus, even if the outer periphery of the connecting member is not tightened by means of a tightening member such as clamp or clip, sufficient sealing properties can be ensured, and at the same time, anti-pulling properties of the connecting member can be improved. In particular, an annular protrusion of the resin tube comprises: an annular taper face that is gradually reduced in diameter from one end side to the other end side; and an annular erected face substantially vertical in axial direction at the rear of the other end of this taper face, whereby the protrusion is cut into the inner periphery face of the connecting member to improve sealing properties and anti-pulling properties more significantly.

A connecting member made of elastomer and formed by molding can be formed integrally with the resin tube connecting end. That is, the connecting end of the generally molded resin tube is set in a die, and elastomer is extruded or injection-molded on the outer periphery, whereby the connecting member made of elastomer can be integrally fixed to the outer periphery of the connection end of the resin tube by means of cure bonding. As such elastomer configuring the connecting member, there can be preferably employed polyethylene chloride, rubber hydrophosphide or the like without being limited thereto in particular. In this case, rubber based adhesive or the like can be applied in advance to the outer periphery face of the connecting end of the resin tube in order to improve sealing properties and anti-pulling properties more significantly.

In addition, the resin tube can be made of a material which is used for a vehicle tube conventionally without being limited thereto. For example, nylon or fluororesin is preferred. The resin tube may be a single layer or may be a plurality of layers in which different resins are laminated. For example, a resin tube having ETFE in its inner layer and having a plurality of layers in which nylons are laminated to be bonded with its outer periphery can be preferably used for a fuel system or the like.

The shape of the resin tube may be a straight tube at an intermediate section other than the connecting end or may have a bent section as far as an end connecting to the connecting member is formed in a straight shape extending straight. In particular, a resin tube comprising a bellows section at its intermediate section other than the connecting end can be bent freely when a pipe is mounted, which is preferable. A resin tube comprising such bellows section can be fabricated by ordinary corrugate molding. The dimensions of the resin tube may be determined properly according to use. For example, a fuel system fuel tube of about 4 to 18 mm in inner diameter and about 0.5 to 2 mm in thickness is generally used.

On the other hand, the connecting structure according to the present invention is such that an insertion end of a metal tube that is a counterpart member is fixed to be inserted into a first engagement bore of a connecting member positioned on the opposite side of the connected resin tube. The metal tube is generally a metallic pipe provided at each device of a vehicle, for example, a metallic pipe already installed at an air cleaner or throttle body in air system piping.

In order to fix a metal tube to be inserted into a first engagement bore of the connecting member, the inner diameter of the first engagement bore of the connecting member is formed to be smaller than the outer diameter of the insertion end of the metal tube, and the insertion end of the metal tube is press-fitted into the first engagement bore, whereby they can be securely fixed to each other. Preferably, an annular protrusion is provided at the outer periphery face of the insertion end of the metal tube, and an annular groove section engaged with this annular protrusion is formed in advance on the inner periphery face of the first engagement bore of the connecting member. In this manner, when the insertion end of the metal tube is inserted into the first engagement bore of the connecting member, the annular protrusion and the annular groove section are engaged with each other so that sealing properties and anti-pulling properties between the connecting member and the metal tube can be improved.

Preferably, the first engagement bore in a cylindrical connecting member can comprise: a taper face section having its inner diameter smaller than an outer diameter of an insertion end of a metal tube, and at the same time, having an annular taper face on which an inner diameter is gradually reduced in diameter from an inlet section of one end thereof inwardly; a innermost engagement bore section being more inward than this taper face section, the innermost engagement bore section being capable of inserting a tip end part of the insertion end of the metal tube and having an inner diameter equal to or smaller than the outer diameter of the tip end; and an annular groove section disposed between the taper face section and the innermost engagement bore section. On the other hand, the insertion end of the metal tube inserted into this first engagement bore has an annular protrusion disposed at the innermost engagement bore section at its tip end part, the annular protrusion having its outer diameter greater than an inner diameter of the annular groove on the outer periphery face of its tip end part, wherein this annular protrusion is formed to be engagingly disposed at the annular groove section.

In order to improve sealing properties and anti-pulling properties between the connecting member and the metal tube, a general tightening member is disposed on the outer periphery face of the connecting member as required so that the connecting member can be tightened against the metal tube. In addition, a rubber based adhesive or the like can be applied to the inner periphery face of the first engagement bore and/or the outer periphery face of the insertion end of the metal tube.

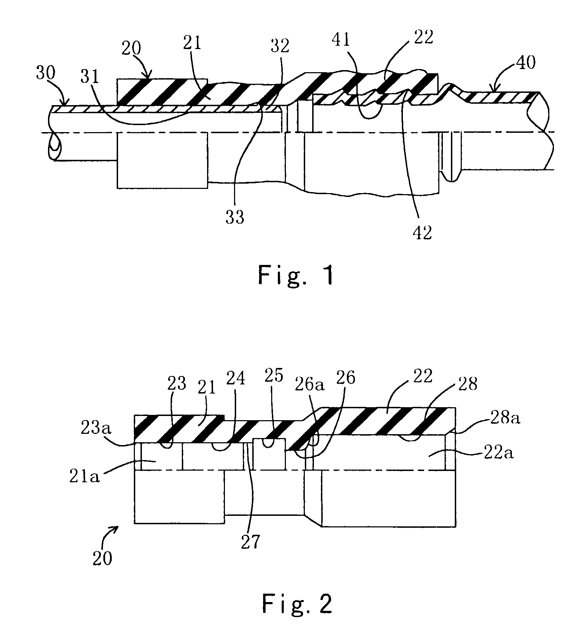

Hereinafter, specific examples of a connecting structure according to the present invention will be described with reference to the accompanying drawings. FIG. 1 is a side view showing a main portion of the connecting structure according to the present invention ,whose upper half is shown in section. In the figure, an insertion end 31 of a metal tube 30 is press-fitted into a first end 21 of a cylindrical connecting member 20 made of elastomer, and a connecting end 41 of a resin tube 40 is press-fitted into a second end 22 of the connecting member 20. FIG. 2 is a side view showing the connecting member employed for the connecting structure, whose upper half is shown in section.

A cylindrical connecting member 20 made of elastomer comprises an axial bore and a first end 21 having a first engagement bore 21a at one end, the first end extending straight; and a second end 22 having a second engagement bore 22a at the other end, the second end extending straight. At the first engagement bore 21a formed at the first end 21 of the cylindrical connecting member 20, there are formed a tubular taper face section 24 extending inwardly in axial direction, the taper face section being gradually reduced in diameter inwardly from an inlet section 23 having its inner diameter smaller than an outer diameter of an insertion end 31 of a metal tube 30; an annular groove section 25 and an innermost engagement bore section 26 inwardly in axial direction of this taper face section 24. The insertion end 31 of the metal tube 30 is press-fitted into this first engagement bore 21a, and is integrally configured.

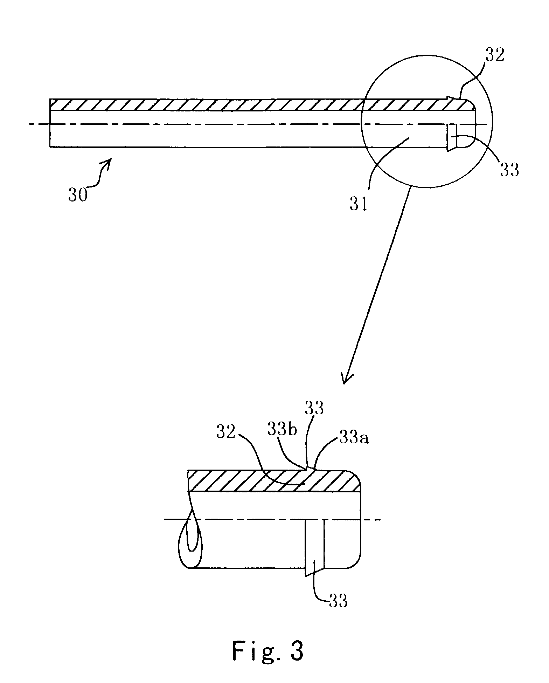

For the metal tube 30, a tip end of its insertion end 31 is inserted from the inlet section 23 of the first engagement bore 21a of the connecting member 20, and a tip end of the insertion end 31 is inserted into the innermost engagement bore section 26 of the first engagement bore 21a. Then, an annular protrusion 33 formed on the outer periphery face of the tip end portion 32 of the metal tube 30 is disposed between the taper face section 24 of the first engagement bore 21a and the innermost engagement bore section 26, and is disposed in an annular groove section 25. The annular protrusion 33 formed on the outer periphery face of the tip end portion 32 of the insertion end 31 preferably comprises: a taper wall section 33a having an annular taper face that is gradually reduced in diameter from a top section toward a tip end side; and an annular cut-in face section 33b substantially formed radially extending annular face at the rear (opposite to the tip end) of this taper wall section 33a, as shown in FIG. 3, wherein this annular cut-in face section 33b cuts into the inner periphery face of the annular groove section 25 of the connecting member 20.

The inner diameter of the inlet section 23 of the first end 21 of the connecting member 20 is set to be smaller than the outer diameter of the insertion end 31 of the metal tube 30. In this embodiment, the outer diameter of the insertion end 31 is 9 mm, and the diameter of the inlet section 23 is 8.7 mm. In addition, the inner diameter of the innermost engagement bore section 26 is set to be equal to or smaller than the outer diameter of the insertion end 31. Further, the outer diameter of the annular protrusion 33 formed on the outer periphery face of the tip end portion 32 of the insertion end 31 is set to be greater than the inner diameter of the annular groove section 25. In this embodiment, the inner diameter of the annular groove section 25 is 9.7 mm, and the outer diameter of the annular protrusion 33 is 10 mm.

Preferably, a taper chamfer 23a is provided at an opening of the inlet section 23 so that the insertion end 31 of the metal tube 30 is easily inserted, and the inner diameter of its end is set to be 9.7 mm which is slightly greater than the outer diameter of the insertion end 31. In addition, the inlet section 23 slightly extends straight in axial direction from the opening. In this embodiment, the inner diameter is set to 7 mm. Further, a comparatively short portion 27 extending straight by 1 mm in axial direction is provided between the taper face section 24 and the annular groove section 25. The annular groove section 25 is formed on an annular surface on which at least its axial one end side extends vertically in radial direction. Further, the inner diameter of the innermost engagement bore section 26 is smaller than the outer diameter of the insertion end 31 of the metal tube 30. In this embodiment, the inner diameter is set to 6 mm.

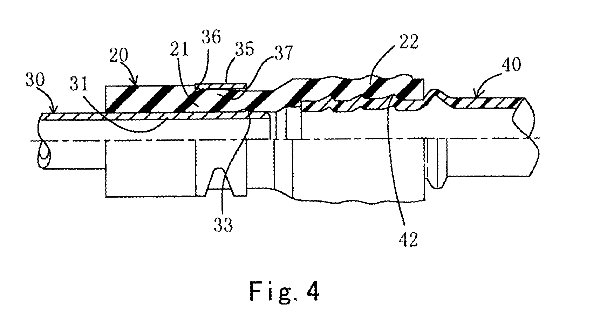

According to another aspect of the present invention, in order to improve anti-pulling properties of the metal tube 30, a tightening member 35 disposed in annular manner such as clamp, band, clip or the like can be arranged at the outer periphery of the first end 21 of the connecting member 20, as shown in FIG. 4. Preferably, in order to improve anti-pulling properties more significantly, a tightening member 35 is arranged in coaxial manner at a position spaced with a distance from one end to the other end, that is, at the proximal outer periphery of the annular protrusion 33 formed at the tip end portion 32 of the inserted and disposed metal tube 30. Further, as shown in FIG. 4, at the outer periphery of the first end 21, a step 36 against which one end side annular end face of the tightening member 35 abuts is provided at a position spaced with a distance from one end to the other end so as not to cause the tightening member 35 to move, and thus, a short diameter section 37 with its outer diameter smaller than one end side can be provided. In addition, according to another aspect, rubber based adhesive or the like can be applied in advance to the inner periphery face of the first engagement bore 21a of the connecting member 20 and/or the outer periphery face of the insertion end of the metal tube 30.

In addition, in order to position the metal tube 30 at its predetermined insertion position, although not shown in figure, a step restricting an insertion quantity can be provided on the outer periphery at the rear of the insertion end 31 of the metal tube 30.

On the other hand, as shown in FIG. 1, in a resin tube 40 fixed to a second engagement bore 22a provided at a cylindrical connecting member 20, a tip end of a connecting end 41 having its outer periphery face smoothly extending in parallel to an axis is inserted from an inlet section 28 of a second engagement bore 22a provided at a second end 22 of a connecting member 20 into the vicinity of a step 26a relevant to the innermost engagement bore section 26 of the connecting member 20. In order to improve sealing properties and anti-pulling properties more significantly, rubber based adhesive or the like can be applied in advance to the outer periphery face of a connecting end 41.

This resin tube 40 comprises an annular protrusion 42 formed to be spaced with a distance from a tip end 41a on the outer periphery face of the insertion end 41, and preferably comprises a plurality of annular protrusions 42, 42, 42 formed to be spaced with a distance from each other. These annular protrusions 42 each comprise an annular taper face 42a gradually reduced in diameter toward the tip end 41a and an annular erected face 42b substantially formed radially extending at the rear of this taper face 42a. Further, a flange shaped protrusion 43 is protruded outwardly in radial direction from the outer periphery face of the connecting end 41 adjacently at the rear of the connecting end 41 of the resin tube 40. In addition, at the rear of this flange shaped protrusion 43, a bellows section 44 is continuously formed integrally with a valley section having its inner diameter substantially equal to the inner periphery face of the connecting end 41 and a mountain section protruded from this valley section.

In the case where the resin tube 40 is fixed by press-in, the inner diameter of the second engagement bore 22a of the connecting member 20 is set to be smaller than the outer diameter of the connecting end 41 of the resin tube 40. In this embodiment, the outer diameter of the connecting end 41 is 12.0 mm, the inner diameter of the second engagement bore 22a is 9.7 mm, and the outer diameter of the annular protrusion 42 is 15.0 mm. Preferably, a taper shaped chamfer 28a is applied to an inlet section 28 of the second engagement bore 22a of the connecting member 20 so as to easily insert the connecting member 41 of the resin tube 40 into its inlet section 28.

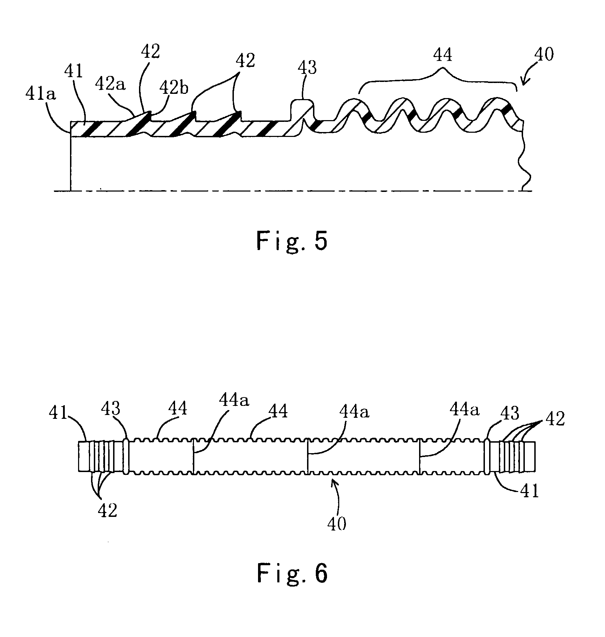

In such resin tube 40, as shown in FIG. 6, connecting ends 41, 41 of the same shape can be provided at both ends in axial direction. In addition, the resin tube 40 is molded by a thermoplastic resin, and a nylon 11 or the like can be preferably employed as a thermoplastic resin material.

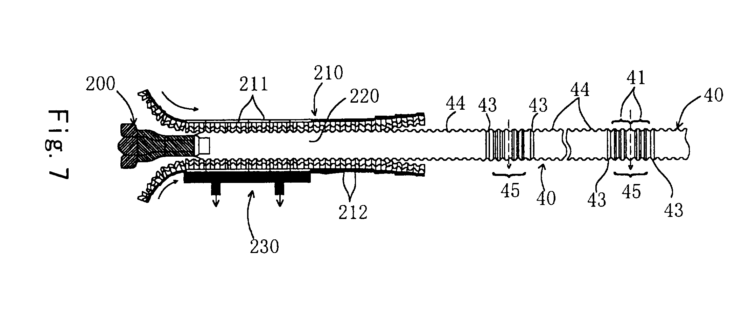

Now, a method of manufacturing a resin tube will be described here. This resin tube 40 has connecting ends 41, 41 of the same shape at both ends, and is manufactured by employing a known corrugated molder. That is, as shown in FIG. 7, an elongated resin body is continuously extruded to a corrugated molder 210 arranged in front thereof by means of a resin extruder 200, and is sandwiched between a number of upper division dies 211 and lower division dies 212 linked with a chain of the corrugated molder 210. In addition, the outer periphery face of a continuous tube 220 is brought into intimate contact with a cylinder surface formed as cavities of the dies 211 and 212 by means of a vacuum device 230 provided at such sandwiched position, the bellows section 44 and the opposite section 45 are substantially molded alternately, and the axial center of the opposite section 45 is cut by a cutter as indicated by dots.

In this manner, as described previously and as shown in FIG. 6, the connecting ends 41, 41 of the same shape can be continuously manufactured at both ends in axial direction; flange shaped protrusions 43, 43 can be manufactured at the rear of the insertion ends 41, 41 at both ends; the bellows section 44 can be manufactured between the flange shaped protrusions 43 and 43; and integrally molded resin tubes 40 can be continuously manufactured one after another.

In the thus formed resin tube 40, as shown in FIG. 6, a boundary line 44a extending in peripheral direction spaced with an interval in axial direction is formed on the outer periphery face of the tube corresponding to the adjacent dies. In addition, in the corrugated molder 210, dies having their cavities of various shapes for molding the bellows section 44, flange shaped protrusion 43, or connecting end 41 can be used by being mounted to chains sequentially in order to form the bellows section 44 and the opposite section 45 alternately.

In the aforementioned embodiment, although the bellows section 44 is formed throughout between the flange shaped protrusions 43 on both ends, there is formed a straight section, an annular protrusion, or an annular recess extending in parallel to an axis properly between such flange shaped protrusions 43, thereby a bellows section of its proper length can be formed.

As described above, according to the connecting structure of the present invention, a conventional rubber hose, of course, is eliminated; an annular protrusion can be easily molded with high precision integrally with the connecting end of the resin tube. In addition, this resin tube is fixed to a connecting member made of elastomer, whereby sealing properties between them can be improved. Further, the annular protrusion is cut into the second end of the connecting member, whereby anti-pulling properties can be improved, and thus, a tightening member such as clamp can be eliminated.

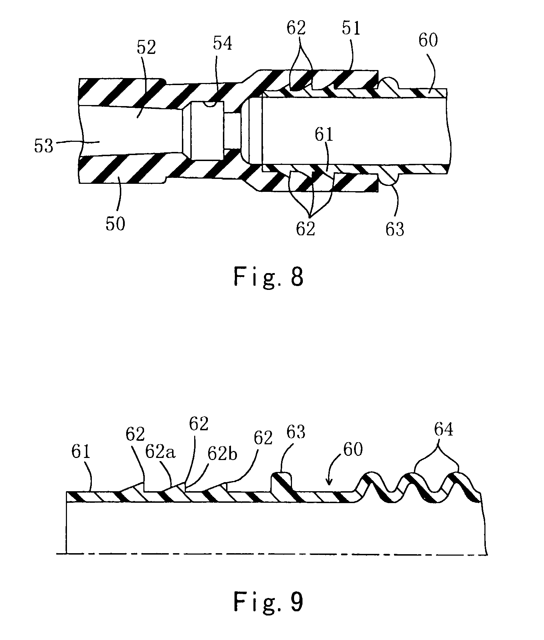

According to another aspect of a connecting structure of the present invention, a specific example when a connecting member and a resin tube are cure bonded with each other by molding will be described here. FIG. 8 is a preferred specific example showing a connecting structure in which the connecting member and the resin tube are cure bonded with each other by molding. FIG. 8 is a side view showing the main portion of the connecting structure whose only upper half is shown in section. In this specific example, an end 51 ( second end) of a cylindrical connecting member 50 made of elastomer is integrally cure bonded with the outer periphery of a connecting end 61 formed in a straight tube shape extending straight of the resin tube 60 by means of molding.

In this case, a resin tube 60 has a plurality of annular protrusions 62 protruded outwardly in radial direction on the outer periphery face of the connecting end 61 extending straight in parallel to an axis, as shown in FIG. 9 in an enlarged manner. Each annular protrusion 62 comprises: an annular taper face 62a that is gradually reduced in diameter from one end side to the other end side; and an annular erected face 62b substantially vertical in axial direction to the rear of the other end of this annular taper face 62a. By this annular protrusion 62 having this annular taper face 62a and an annular erected face 62b, an end 51 of a connecting member 50 is integrated to be fixed rigidly and intimately to the resin tube 60 together with cure bonding caused by molding applied to the outer periphery of the connecting end 61 of the resin tube 60.

An annular rise section 63 protruded from the outer periphery face is provided at the other end of the connecting end 61 of the resin tube 60. The other end of the engagingly fitting section 51 of the connecting member 50 cure bonded with the connecting end 61 of the resin tube 60 abuts against an annular rise section 63, thereby preventing the connecting member 60 from being pushed and moved to the other end side in axial direction. A bellows section 64 is provided at the intermediate section of this resin tube 60. The bellows section 64 shaped such that a valley section having the same outer diameter as the outer periphery face of the first end 51 (or end 51) of the connecting member 50 is continuously formed together with a mountain section protruded from this valley section. As described previously, this bellows section can be formed by general corrugated molding.

On the other hand, the connecting member 50 engagingly fitted to the outer periphery of the connecting end 61 of the resin tube 61 has a first engagement bore 52 extending inwardly in axial direction from an insert port 53 at one end thereof so that an insertion end of a metal tube (not shown) can be engaged to be press-fitted into this first engagement bore 52. The inner diameter of the first engagement bore 52 of the connecting member 50 is formed to be smaller than the outer diameter of the insertion end of the metal tube. In addition, on the inner periphery face of the first engagement bore 52, an annular groove section 54 is formed in advance so as to be engaged with an annular protrusion provided on the outer periphery face of the insertion end of the metal tube.

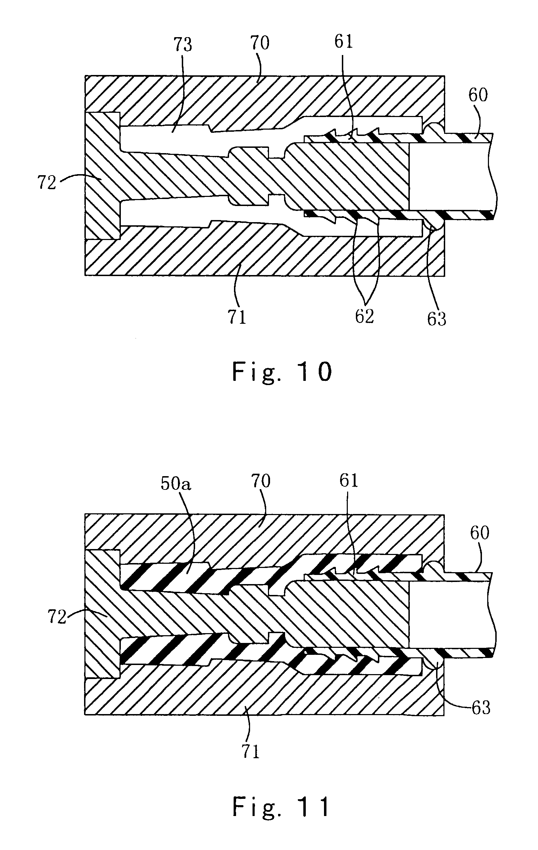

A method of fixing the connecting member 50 of this connecting structure to a resin tube 60 by means of molding will be described here. As shown in FIG. 10, a connecting end 61 of the resin tube 60 fabricated in advance is set in divided split dies 70 and 71, and a core die 72 is inserted into an one end opening of the connecting ends 61. A cavity 73 formed by the split dies 70 and 71 and the core die 72 corresponds to the shape of the connecting member 50 to be formed. Recesses engaged with the annular rise section 63 of the resin tube 60 is provided at the split dies 70 and 71, and the resin tube 60 is set so as to engage the annular rise section 63 at this recess, whereby the resin tube 60 can be easily positioned in the split dies 70 and 71.

As shown in FIG. 11, an elastomer material 50a is then ejected into the cavity 73 formed by the split dies 70 and 71 and the core die 72 or the split dies 70 and 71 and the core die 72 are removed, and then, the elastomer material 50a is cured. In this manner, as shown in FIG. 8, the end 51 of the connecting member 50 made of elastomer is cure bonded with the connecting end 61 of the resin tube 60, and an integrally fixed connecting structure can be obtained.

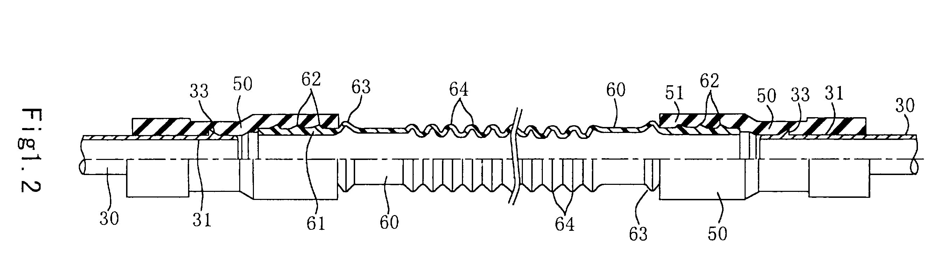

In addition, FIG. 12 shows a specific example of the above connecting structure in which a metal tube is connected to the connecting member at both ends of the resin tube. In this connecting structure, the connecting member 50 made of elastomer is cure bonded integrally with the connecting end 61 at both ends of the resin tube 60, and the inner diameter of the first engagement bore 52 of each connecting member 50 is formed to be smaller than the outer diameter of the insertion end 31 of the metal tube 30, whereby the insertion end 31 of the metal tube 30 is engaged to be press-fitted into each engagement bore 52. An annular protrusion 32 is formed in advance on the outer periphery face of the insertion end 31 of the metal tube 30. On the other hand, an annular groove section 54 is formed in advance on the inner periphery face of the engagement bore 52 of the connecting member 50. When the insertion end 31 of the metal tube 30 is inserted, the annular protrusion 32 provided at its outer periphery face is engaged with the annular groove section 54 so as to be rigidly linked with each other.

In the connecting structure shown in the above specific example, a connecting member can be cure bonded easily, precisely, and rigidly with the outer periphery of the connecting end of the resin tube by means of molding. Thus, there is no need to use a tightening member such as clamp or clip, the number of parts, cost, and weight can be reduced. In addition, sealing properties between the resin tube and the connecting member can be improved, and excellent anti-pulling properties can be obtained. Although the connecting end 61 is directly cure bonded, as shown in another embodiment, rubber based adhesive or the like is applied to the outer periphery face of the connecting end 61, whereby cure bonding may be provided via such adhesive.

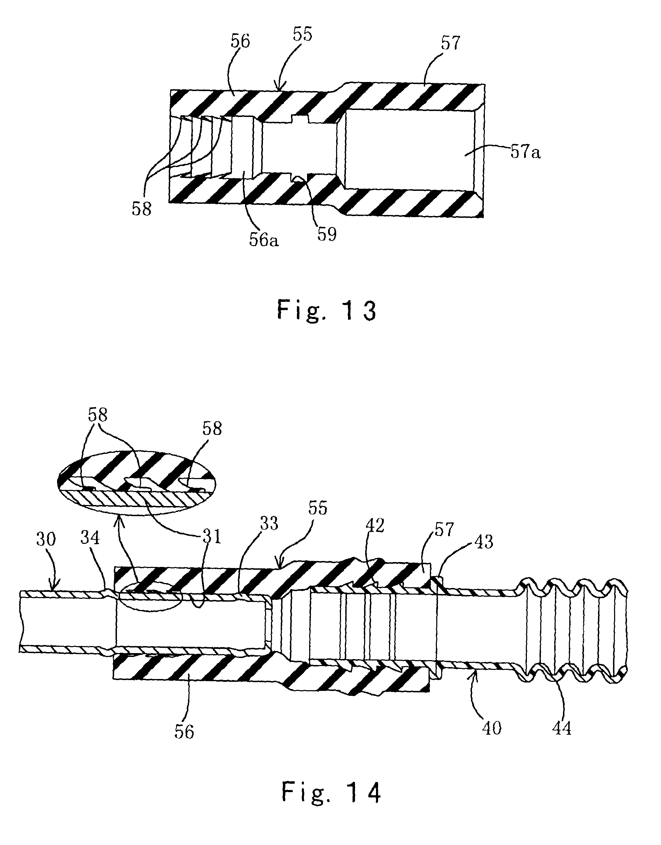

Further, as a modified example of a connecting member in a connecting structure according to the present invention, as shown in FIG. 13 and FIG. 14, a plurality of slip-off proof fins 58 for preventing the metal tube 30 from slip-off can be provided on the inner periphery face of a first engagement bore 56a provided at a first end 56 of a connecting member 55. In addition, an annular groove section 59 engaged with an annular protrusion 33 provided on the outer periphery face of the insertion end 31 of the metal tube 30 is provided at the first engagement bore 56a. A second engagement bore 57a for connecting a resin tube 40 is provided at a second end 57 of the connecting member 55. In this specific example, a positioning protrusion 34 for determining a position of insertion into the connecting member 55 is provided at the rear end of the insertion end 31 of the metal tube 30.

When the metal tube 30 is inserted into the first engagement bore 56a of this connecting member 55, the annular protrusion 33 of the metal tube 30 is engaged with the annular groove section 59, as shown in FIG. 14. In this manner, sealing properties between the metal tube 30 and the connecting member 55 is ensured, and at the same time, the slip-off is prevented. Further, a slip-off proof fins 58 provided at the inner periphery face of the first engagement bore 56a comes into intimate contact with the outer periphery face of the metal tube 30. Like another specific example, a connecting end 41 comprising an annular protrusion 42 of the resin tube 40 is press-fitted into the second engagement bore 57a of the connecting member 55 or is fixed by cure bonding.

The slip-off proof fin 58 is formed in a shape inclined in a direction in which the metal tube 30 is inserted. Therefore, when the metal tube 30 is inserted, the fin is not substantially resistive to such insertion, and the tube can be easily inserted with gentle force. However, if pulling force acts to the metal tube 30, the slip-off proof fin 58 is deformed so as to be erected in vertical direction. At the same time, a contact area between the slip-off proof fin 58 and the metal tube 30 increases, and frictional force increases. Thus, a large resistance force is generated between the fin 58 and the metal tube 30, and better slip-off proof effect can be attained.

Further, in the present invention, a one-way valve (a check valve) can be provided at an intermediate bore section extending in axial direction between the first engagement bore and the second engagement bore of the connecting member. This one-way valve is arranged to open a flow passage so that fluid can flow from one end to the other end due to a pressure difference of the fluid caused at the one end side and the other end side and so that fluid cannot flow from the other end to one end. The one-way valve is provided on the inner periphery face of the intermediate bore section of the connecting member.

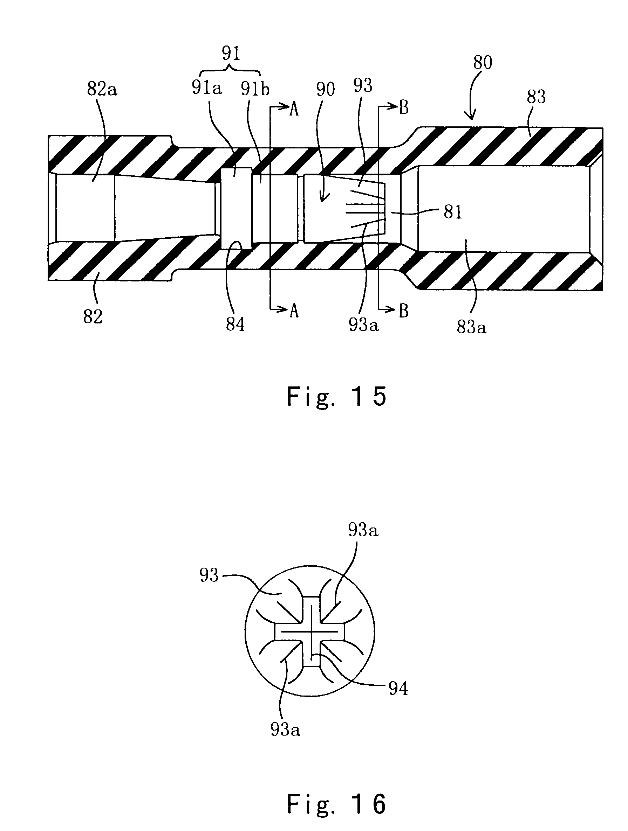

A specific example of the connecting structure according to the present invention in which such one-way valve is provided in a cylindrical connecting member will be described with reference to the accompanying drawings. In the connecting member shown in FIG. 15, a connecting member 80 made of elastomer and a one-way valve 90 are formed independently, and the one-way valve 90 is held to be engaged with an intermediate bore section 81 of the connecting member 80. In this case, although the one-way valve 90 is preferably made of elastomer as is the connecting member 80, the valve may be made of a metal that can be resiliently deformed.

This connecting member 80 has a flow passage in axial direction, and comprises: a first engagement bore section 82a for pressing a metal tube into a first end 82 that is one end thereof; and a second engagement bore section 83a for fixing a resin tube to a second end part 83 that is the other end. An intermediate bore section 81 that is a space capable of disposing the one-way valve 90 is provided between the first engagement bore section 82a and the second engagement bore section 83a. An annular groove 84 for engaging an annular protrusion 91a of a proximal end 91 formed at one end of the one-way valve 90 is provided at one end side of the intermediate bore section 81.

On the other hand, the one-way valve 90 comprises a cylindrical proximal end 91 and a cylindrical peripheral wall end 93. The proximal end 91 consists of: a comparatively thin cylinder section 91b having its inner diameter equal to or slightly larger than the inner diameter of the intermediate bore section 81 of the connecting member 80; and a large diameter portion 91a provided at one end of a cylinder section 91b so as to be engaged with an annular groove 84 of the connecting member 80. In addition, a thin deformable peripheral wall end 93 extends from an cylinder section 91b of the proximal end 91 in concentric direction. As shown in FIG. 15 and FIG. 16, this deformable peripheral wall end 93 has a plurality of folding section 93a(four) and protrusion portion 94 that is gradually inclined in concentric direction from one end to the other end. A protruding portion 94 having an intimate contact section 94a is formed at the other end of the deformable peripheral wall end 93 by means of these folding section 93a.

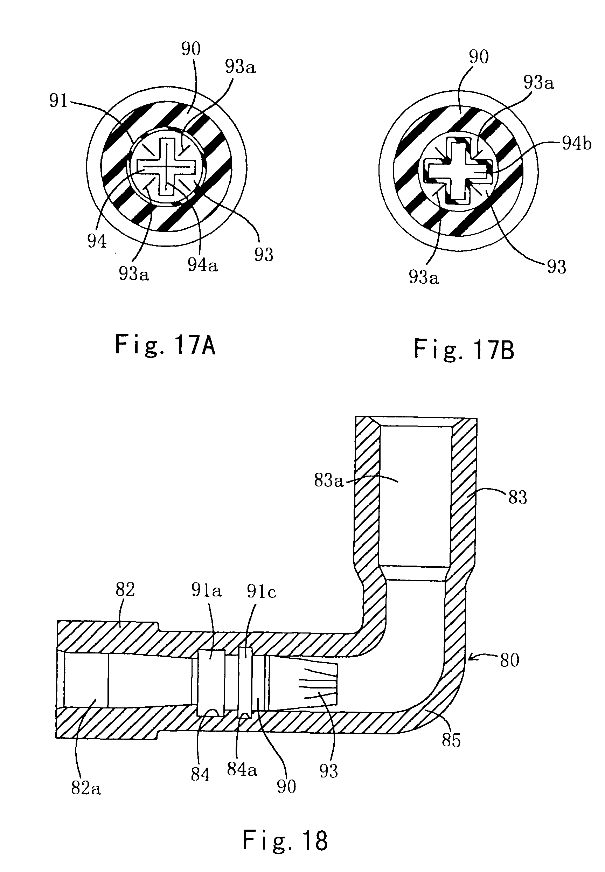

Therefore, in this one-way valve 90, the deformable peripheral wall end 93 is pressed against the fluid pressure from a direction (the second engagement bore section 83a shown in FIG. 15) opposite to the fluid flow direction, as shown in FIG. 16, whereby the folding portions 93a of the deformable peripheral wall end 93 are folded, the intimate contact section 94a is closed to disable fluid flow, and thus, fluid does not flow in opposite direction. On the other hand, the intimate contact section 94a formed at the other end of the deformable peripheral wall end 93 is opened in cross shape or original cylinder shape to enable fluid flow against the fluid pressure from the fluid flow direction (the first engagement bore section 82a), as shown in FIG. 17. Therefore, fluid can be supplied through this opening 94b.

In addition, the connecting member 80 at which the one-way valve 90 is provided may have a bent section 85 intermediately as shown in FIG. 18. In a specific example shown in FIG. 18, first large diameter portion 91a of the one-way valve 90 is engaged with the annular groove 84 of the connecting member 80, and a second large diameter portion 91c provided at a cylinder section 91b is engaged with a second annular groove 84a of the connecting member 80, whereby the one-way valve 90 can be held to be engaged more reliably. FIG. 15 and FIG. 18 each illustrate an opened one-way valve 90 (in fluid flow state).

In another specific example of a connecting member comprising a one-way valve according to the present invention, as shown in FIG. 19, a connecting member 100 and a one-way valve 110 are made of elastomer, and are molded integrally by means of injection molding or the like. That is, this one-way valve 110 comprises a thin peripheral wall 112 extending integrally from the inner periphery face of an intermediate bore section 101 of the connecting member 100 in concentric direction. As is the case with FIG. 15 to FIG. 17, this peripheral wall 112 has a plurality of folding portions and protruding portions in peripheral direction that are gradually inclined in concentric direction from one end to the other end, the deformable peripheral wall 112 having an intimate contact portion 113a formed at the other end 113 of the peripheral wall 112.

In this one-way valve as well, as is the case with the one-way valve shown in FIG. 15 to FIG. 17, the deformable peripheral wall 112 has a plurality of folding portions and protruding portions in peripheral direction, and the protruding portion has the intimate contact portion 113a formed at the other end 113 of the peripheral wall 112. Opening and closing operation of this one-way valve 110 is similar to that of the one-way valve shown in specific examples of FIG. 15 to FIG. 17. In addition, FIG. 19 shows a closed (fluid flow disabled) one-way valve 110.

By employing a connecting member comprising these one-way valve, for example, as is the case with connection between a vehicle engine and a brake power multiplier booster, a variety of connecting structures required for a fluid to flow in an arbitrary one direction only can be simply constructed. For example, as shown in FIG. 19, a connecting member 100 such as rubber joint integrating the one-way valve 110 is employed, a metal tube 30 is inserted to be press-fitted into the first engagement bore 102a at the first end 102 of the connecting member 100, and a resin tube 40 is fixed to the second engagement bore 103a at the second end 103. In this manner, the metal tube 30 and the resin tube 40 are connected to each other via the connecting member 100, and in this connecting structure the one-way valve 110 can be easily built in the connecting member 100.

In each of the above specific examples, although a description has been mainly given by way of exemplifying a rubber joint employed for a piping system connecting an engine and a booster to each other, this rubber joint can be used for various piping systems including vehicle fuel system or air system.

## Claims

1. A connecting structure for connecting opposite tubes each other, said connecting structure comprising:
a cylindrical connecting member made of elastomer, the cylindrical connecting member having a first engagement bore at one end, having a second engagement bore at the other end, and having a molded surface;
a metal tube in which an insertion end of its outer diameter substantially greater than the inner diameter of the first engagement bore of the connecting member is fixed to be inserted into the first engagement bore; and
a resin tube having an annular protrusion formed to be protruded on the outer periphery face of a connecting end connected to the second engagement bore of said connecting member, the resin tube having the connecting end fixedly connected into the second engagement bore without the other end being tightened by a tightening member arranged in annular manner from its outer periphery.

2. A connecting structure as claimed in claim 1, wherein an outer diameter of the connecting end of said resin tube is formed to be greater than an inner diameter of a second engagement bore of said connecting member, and the connecting end of said resin tube is press-fitted into the second engagement bore of the connecting member.

3. A connecting structure as claimed in claim 1, wherein said connecting member molded at the outer periphery of the connecting end of said resin tube is fixed to the resin tube by cure bonding.

4. A connecting structure as claimed in claim 2, wherein the annular protrusion of said resin tube comprises an annular taper face gradually reduced in diameter from one end side to the other end side and substantially radially extending annular surface at the rear of the other end of this taper face.

5. A connecting structure as claimed in claim 1, said connecting structure comprising:
the first engagement bore of said connecting member comprising a taper face section having an annular taper face whose inner diameter is gradually reduced inwardly from the one end; an innermost engagement bore section which is provided such that a tip end of the insertion end of said metal tube can be inserted inwardly from the taper face section and which has an inner diameter smaller than the tip end; and
an annular groove section which is disposed between the taper face section and the innermost engagement bore section and which has an inner diameter greater than an outer diameter of the insertion end of said metal tube; and
said metal tube is positioned such that the tip end of the insertion end which has been inserted in the first engagement bore of said connecting member is disposed in the innermost engagement bore section and is provided at an outer peripheral surface of the tip end of the insertion end with an annular protrusion section which is engaged and disposed in the annular groove section of said connecting member and which has an outer diameter larger than the inner diameter of the annular groove section.

6. A connecting structure as claimed in claim 1, wherein a one-way valve is arranged at an intermediate bore section between the first engagement bore and the second engagement bore of said connecting member, said one-way valve being configured so as to open a flow passage from one end to the other end due to a pressure difference of a fluid generated between the one end side and the other end side and so as to close a flow passage from the other end to one end.

7. A connecting structure as claimed in claim 6, wherein said one-way valve comprises a peripheral wall extending in concentric direction integrally from the inner periphery of the intermediate bore section of said connecting member, the peripheral wall having an intimate contact section with which the peripheral wall substantially comes into contact while the peripheral wall is gradually reduced in diameter from one end to the other end to enable fluid flow from one end to the other end and disable fluid flow from the other end to one end.

8. A connecting structure as claimed in claim 6, wherein said one-way valve comprises a deformable peripheral wall gradually extending in concentric direction integrally from the inner periphery face of the intermediate bore section of said connecting member, and the deformable peripheral wall has a plurality of folding portions and protruding portions alternately in a peripheral direction which are gradually inclined in concentric direction, the protruding portion having an intimate contact portion formed at the other end of the deformable peripheral wall so that the deformable peripheral wall enables fluid flow from one end to the other end and disables fluid flow from the other end to one end.

9. A connecting structure as claimed in claim 6, wherein said one-way valve is made of elastomer and comprises a cylindrical proximal end capable of being inserted into the intermediate bore section of said connecting member, and a deformable peripheral wall extending in concentric direction integrally from a cylinder wall of the proximal end, and the deformable peripheral wall has a plurality of folding portions and protruding portions alternately in a peripheral direction which are gradually inclined in concentric direction, the protruding portion having an intimate contact portion formed at the other end of the deformable peripheral wall so that the deformable peripheral wall enables fluid flow from one end to the other end and disables fluid flow from the other end to one end.

10. A connecting structure for connecting opposite tubes each other,said connecting structure comprising:
a cylindrical connecting member made of elastomer, the connecting member having a molded surface having an engagement bore at one end; and
a resin tube having an annular protrusion formed to be protruded on the outer periphery face of a connecting end connected to an engagement bore of the connecting member, the connecting end being fixedly connected into the engagement bore of said connecting member without the one end being tightened by a tightening member arranged in annular manner from its outer periphery.
